(19) Europäisches Patentamt
European Patent Office
Office européen des brevets

(11) **EP 2 830 295 B1**

(12) **EUROPEAN PATENT SPECIFICATION**

(45) Date of publication and mention
of the grant of the patent:
**18.05.2016 Bulletin 2016/20**

(21) Application number: **12871953.1**

(22) Date of filing: **27.04.2012**

(51) Int Cl.:
*H04M 1/725* (2006.01)          *G06F 3/048* (2006.01)
*G06F 21/88* (2013.01)          *G06F 21/31* (2013.01)
*G06F 21/84* (2013.01)          *H04M 1/67* (2006.01)
*H04W 52/02* (2009.01)

(86) International application number:
**PCT/CN2012/074857**

(87) International publication number:
**WO 2013/139065 (26.09.2013 Gazette 2013/39)**

(54) **METHOD AND DEVICE FOR ADJUSTING SCREEN LOCKING TIME, AND ELECTRONIC TERMINAL**

VERFAHREN UND VORRICHTUNG ZUR EINSTELLUNG EINER BILDSCHIRMSPERRZEIT UND ELEKTRONISCHES ENDGERÄT

PROCÉDÉ ET DISPOSITIF POUR RÉGLER LE TEMPS DE VERROUILLAGE D'ÉCRAN, ET TERMINAL ÉLECTRONIQUE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2012 CN 201210075659**

(43) Date of publication of application:
**28.01.2015 Bulletin 2015/05**

(73) Proprietor: **ZTE Corporation**
**Shenzhen, Guangdong 518057 (CN)**

(72) Inventors:
• **ZHOU, Yong**
**Shenzhen**
**Guangdong 518057 (CN)**
• **YU, Feng**
**Shenzhen**
**Guangdong 518057 (CN)**
• **CHEN, Hua**
**Shenzhen**
**Guangdong 518057 (CN)**
• **LI, Hongbo**
**Shenzhen**
**Guangdong 518057 (CN)**

(74) Representative: **Tischner, Oliver**
**Lavoix Munich**
**Bayerstrasse 83**
**80335 München (DE)**

(56) References cited:
**CN-A- 101 945 166     CN-A- 101 951 444**
**CN-A- 102 256 010     CN-A- 102 270 097**
**CN-A- 102 340 590     US-A1- 2007 050 654**
**US-A1- 2009 033 459     US-B1- 6 516 421**

## Description

### FIELD

The disclosure relates to the field of mobile terminals, and more particularly to a method and a device for adjusting screen locking time, and an electronic terminal.

### BACKGROUND

At present, most mobile terminals in people's daily life generally support automatic screen locking in order to avoid misoperation and protect privacy, i.e. if a user does not operate initiatively within a period of time, a terminal will lock the screen automatically. The delay time from the moment when a user stops operation to the moment before a screen is locked automatically is commonly known as automatic screen locking time, or screen locking time for short. Generally, a terminal will provide a group of screen locking time for a user to select, e.g. 10 seconds, 20 seconds, 30 seconds, 1 minute etc. Once set, the screen locking time of an existing mobile terminal is fixed unless being modified by a user initiatively. If a user does not set the screen locking time, a system will generally apply a default value. Since different users have different usage habits, the fixed screen locking time cannot be completely applicable to each user, or even if the fixed screen locking time is applicable to some usage scenarios of users, it is not applicable to some other usage scenarios, e.g. although a relatively short period of screen locking time may be set to prevent misoperation of a terminal effectively, unlocking operations may be added for a user, which causes trouble to the user; moreover, although a relatively long period of screen locking time may reduce unlocking operations for a user, the possibility of misoperation may be increased. Of course, a user may also switch different screen locking time manually according to different usage scenarios, but frequent manual switching is a burden itself for the user. Therefore, it is in urgent need of a method for automatically adjusting the screen locking time of the terminal according to usage scenarios and habits of users so as to improve the satisfaction in user experience.

US 6516421B1 discusses a method and means fort adjusting the timing of user-activity-dependent changes of operational state of an apparatus.

### SUMMARY

In view of this, the disclosure provides a method and a device for adjusting screen locking time, and an electronic terminal capable of automatically adjusting the screen locking time of a terminal dynamically according to different usage scenarios and habits to further improve the satisfaction in user experience.

To solve the technical problem above, the disclosure provides a method for adjusting screen locking time, as cited in claim 1.

The disclosure further provides a device for adjusting screen locking time, as cited in claim 8.

The disclosure further provides an electronic terminal, including a display screen, wherein it further may include the above device for adjusting screen locking time; the device for adjusting screen locking time is connected with the display screen and configured to adjust the screen locking time of the electronic terminal.

The disclosure has the following beneficial effect: according to a method for adjusting screen locking time of the disclosure, time interval values T1, T2,..., and TN between screen locking and screen unlocking for consecutive N times are acquired, and when it is determined that the acquired time interval values T1, T2,..., and TN are all within a preset threshold range, a current screen locking time value is updated into the sum of the current screen locking time value and a preset time delay value. In the disclosure, a usage situation in which a terminal automatically locks the screen and a user unlocks the screen is monitored in real time, and according to the time intervals between screen locking and screen unlocking for consecutive N times, it is determined whether the current screen locking time is appropriate in the current usage environment and situation. When the determining result is that the current screen locking time is inappropriate, the current screen locking time value is automatically updated into the current screen locking time value plus the preset time delay value, so as to dynamically adjust the screen locking time according to the current usage environment and situation. The user does not need to unlock frequently and does not need to switch the screen locking time manually in different usage environments, thereby effectively reducing the unlocking operations and screen locking settings of the user and improving satisfaction in the user experience.

### BRIEF DESCRIPTION OF THE DRAWINGS

Fig. 1 is a flowchart of an embodiment of a method for adjusting screen locking time of the disclosure;

Fig. 2 is a flowchart of another embodiment of a method for adjusting screen locking time of the disclosure;
Fig. 3 is a structural diagram of an embodiment of a device for adjusting screen locking time of the disclosure;
Fig. 4 is a structural diagram of another embodiment of a device for adjusting screen locking time of the disclosure; and
Fig. 5 is a structural diagram of still another embodiment of a device for adjusting screen locking time of the disclosure.

## DETAILED DESCRIPTION

The disclosure will be further described in details below through embodiments and in combination with the accompanying drawings.

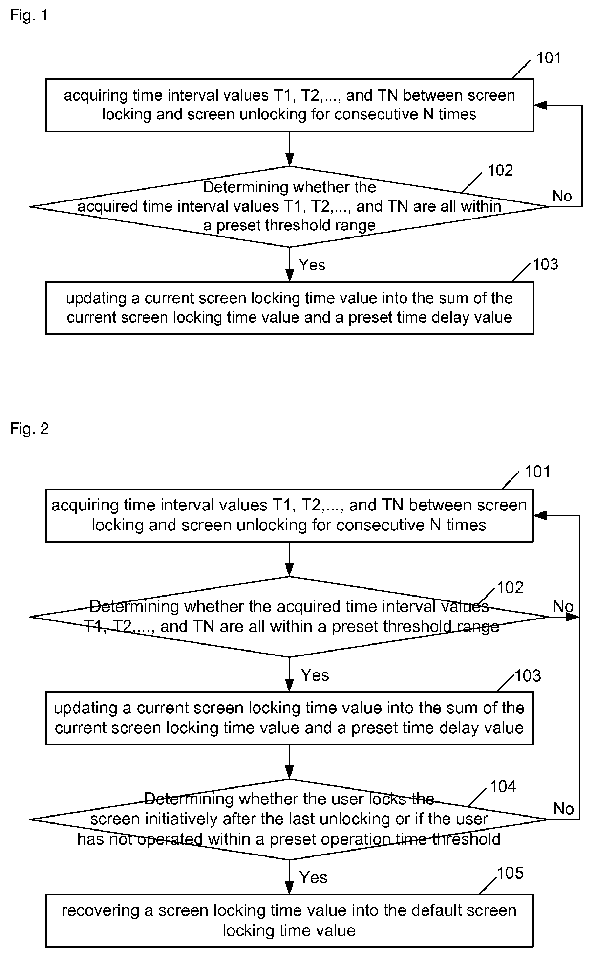

A method for adjusting screen locking time in the present embodiment is applicable to a mobile terminal and other terminals that needs a screen locking operation, e.g. electronic mobile terminals including a mobile phone, a laptop, and iPad etc., and is also applicable to a common desktop computer etc. Referring to Fig. 1, the method mainly includes the following steps.

Step 101: Time interval values T1, T2,..., and TN between screen locking and screen unlocking for consecutive N times are acquired,

wherein the N value is a preset value and a specific value thereof may be selected and set according to actual conditions, e.g. the N value may be selected and set according to different usage scenarios and usage conditions, specifically the N value may be 2 or 3, which can improve the timeliness of adjustment of screen locking time; the time interval values between screen locking and screen unlocking are acquired for many times so that the unlocking and usage habits of a user in different usage environments and situations can be analyzed according to the time interval values to find a rule of unlocking operations of the user, intelligently adjust the automatic screen locking time of a mobile terminal and effectively reduce unlocking operations of the user.

Step 102: Whether the acquired time interval values T1, T2,..., and TN are all within a preset threshold range is determined, i.e. whether the user performs unlocking immediately or within a relatively short period of time after each screen locking is determined; if yes, it is determined that a screen locking time value set currently fails to meet a current requirement of the user and the screen locking time needs to be prolonged, then Step 103 is performed; however, if the user performs unlocking within a relatively long period of time after screen locking, it is indicated that the screen locking time value set currently basically meets a current usage requirement of the user, then Step 101 is performed; therefore, the preset threshold range in the present embodiment may be selected and set according to actual conditions, and may be specifically selected and set according to different requirements or different usage scenarios of the user, e.g. the threshold range may be set as 0 to 5 seconds.

Step 103: When it is determined that the time interval values T1, T2,..., and TN are all within the preset threshold range, it is indicated that the screen locking time value set currently is inappropriate to the user, and a current screen locking time value is updated into the sum of the current screen locking time value and a preset time delay value.

Therefore, the adjusting method in the present embodiment can monitor a usage situation in which a terminal automatically locks the screen and a user unlocks the screen in real time, and according to the time intervals between screen locking and screen unlocking for consecutive N times, it is determined whether the current screen locking time is appropriate in the current usage environment and situation; when it is inappropriate, the current screen locking time value is automatically updated into the current screen locking time value plus the preset time delay value, so as to f dynamically adjust the screen locking time according to the current usage environment and situation; the user does not need to unlock frequently and does not need to switch the screen locking time manually in different usage environments, thereby effectively reducing the unlocking operations and screen locking settings of the user and improving satisfaction in the user experience;

it should be noted that, when the current screen locking time value is updated into the sum of the current screen locking time value and the preset time delay value in the present embodiment, there may be many methods for setting and selecting the preset time delay value, e.g. one or more fixed time values may be selected as the time delay value according to specific statistical usage conditions of the user, e.g. 10 seconds or 20 seconds may be selected fixedly as the preset time delay value; when it is detected, according to the method above, that the current screen locking time value cannot meet the requirement of the user, the current screen locking time value is updated into the current screen locking time value plus the preset time delay value of 10 seconds or 20 seconds.

Besides the methods above, the preset time delay value may be also specifically determined according to a current usage scenario of the user, e.g. when browsing a webpage, if the user browses one page within 20 seconds while the screen locking time value set currently is 10 seconds, then the user needs to perform an unlocking operation accordingly after browsing each page, i.e. an unlocking operation needs to be performed every 10 seconds; accordingly, when the user switches to another usage scenario, a switching operation might be performed initiatively every 30 seconds while the current screen locking time is 10 seconds, then the user needs to perform unlocking twice before the user operates initiatively. It can be learned that the user operates initiatively at different time intervals in different usage scenarios for tasks executed by the terminal currently (e.g. webpage browsing, novel reading), thus in order to better meet user requirements, the preset time delay value may be specifically selected and determined according to a current usage scenario of the user; moreover, it can be learned from the analysis above that the time interval values between the last time when the user operates initiatively and the current unlocking moment after each unlocking and before the next screen locking are important basis for setting the preset time delay value; more specifically, when acquiring the time interval values for N times between screen locking and screen unlocking, the following steps are further included: acquiring time interval values T21, T22,..., and T2N between the last time when the user operates initiatively and the current unlocking moment after each unlocking and before the next screen locking; and according to the time interval values T21, T22,..., and T2N, acquiring a first time delay value according to a first preset rule, wherein the preset delay value includes the first time delay value, i.e. when the current screen locking time value is updated, it is updated into a value which includes the first time delay value. The first preset rule may be selecting a maximum time value MAX[T21, T22, ......, T2N] from the time interval values T21, T22,..., and T2N, or may be randomly selecting a time value from the time interval values T21, T22,..., and T2N,or taking the average value of the time interval values T21, T22,..., and T2N etc., as long as the selected time value basically meets the user requirements. To best meet operation requirements of the user, the maximum time value MAX [T21, T22, ......, T2N] is preferably selected from the time interval values T21, T22,..., and T2N in the present embodiment as the first time delay value.

In other embodiments of the disclosure, in order to adjust the screen locking time value more precisely, the time interval values between each screen locking and unlocking may be further used as one of the bases for setting the preset time delay value to learn the usage habits and rules of the user more precisely; therefore, after acquiring the time interval values T1, T2,..., and TN in the step above, a second time delay value may be further acquired according to the time interval values T1, T2,..., and TN and a preset second preset rule; the preset time delay value may include the first time delay value and the second time delay value; the second preset rule may be the same as the first preset rule; in the present embodiment, the maximum time value MAX[T1, T2, ......, TN] in the time interval values T1, T2,..., and TN may be also used preferably as the second time delay value.

In other embodiments of the disclosure, in order to adjust the screen locking time value more precisely, a time value consumed by the user during each unlocking may be used as one of the bases for setting the preset time delay value. Therefore, when acquiring the time interval values of N times between screen locking and unlocking in the step above, the following steps may be further included: acquiring time values T31, T32,..., T3N consumed by each unlocking; according to the time values T31, T32,..., T3N, acquiring a third time delay value according to a third preset rule, wherein the preset time delay value includes the third time delay value; the third preset rule may be the same as the first preset rule. In the present embodiment, the maximum time value MAX [T31, T32, ......, T3N] in T31, T32,..., T3N is also used preferably as the third time delay value, i.e. the preset time delay value may include the first time delay value and/or the second time delay value.

In addition, considering factors including uncertainty of operating time etc., the preset time delay value may further include a fourth time delay value in the present embodiment; the fourth time delay value is a preset time delay compensation value to compensate a time difference caused by other uncertain factors to best meet the operation requirements of the user.

It should be noted that updating the current screen locking time value into the sum of the current screen locking time value and the preset time delay value in the present embodiment may specifically include updating a current default screen locking time value of the terminal into the sum of a current default screen locking time value and the preset time delay value, or may also include updating the updated screen locking time value into the updated screen locking time value plus the preset time delay value over again based on the last updating. In the present embodiment, the current default screen locking time value is preferably updated into the current default screen locking time value plus the preset time delay value. Referring to Fig. 2, Step 101 to Step 103 are as described above and will not be repeated. In the present embodiment, after updating the current default screen locking time value into the sum of the current default screen locking time value and the preset time delay value, the method may further include:

Step 104: whether the user locks the screen initiatively after the last unlocking or if the user has not operated within a preset operation time threshold is determined; if yes, it is indicated that the current operation has been finished and Step 105 is then performed; otherwise, Step 101 is then performed;

Step 105: if the screen is locked initiatively or the user has not operated within the preset operation time threshold, a screen locking time value is recovered into the default screen locking time value.

At the same time, in order to avoid repeating the screen locking time adjusting process when the user switches, after finishing the current usage scenario, to the usage environment over again, the following steps may be further included: after updating the current screen locking time value into the sum of the current screen locking time value and the preset time delay value through the method above, steps of a current usage scenario are recorded; then the current usage scenario is associated with the updated screen locking time value. During a subsequent usage process, once it is detected that the user enters the usage scenario over again, the current screen locking time value may be adjusted into the updated screen locking time value directly, thus resources are saved and the satisfaction in user experience is improved.

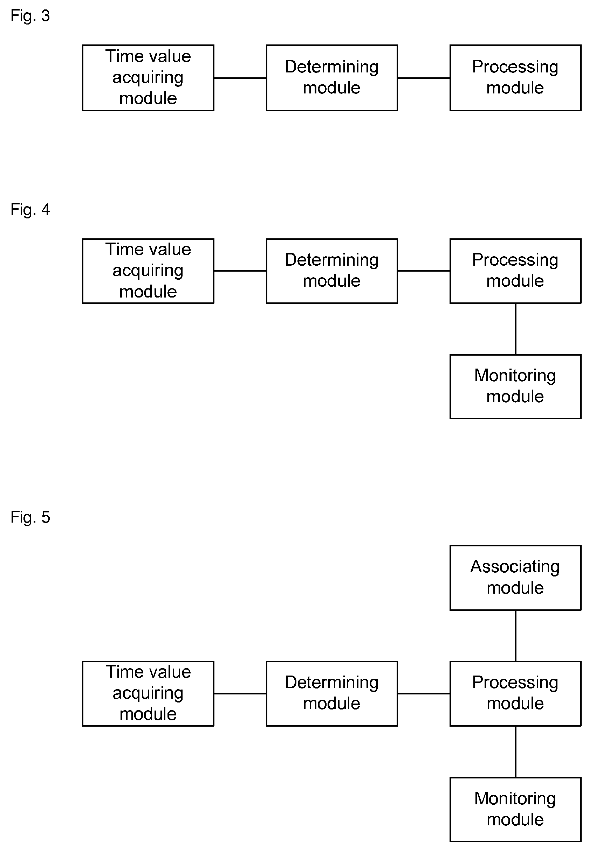

An embodiment of the disclosure further provides a device for adjusting screen locking time. The device may be provided in a terminal provided with a display screen, and connected with the display screen directly or indirectly through other paths to dynamically adjusting a screen locking time value of the terminal. Referring to Fig. 3, the device includes a time value acquiring module, a determining module and a processing module;

the time value acquiring module is configured to acquire time interval values T1, T2,..., and TN between screen locking and screen unlocking for consecutive N times, and send the acquired time interval values T1, T2,..., and TN to the determining module, wherein the N value is a preset value;

the determining module is configured to determine whether the acquired time interval values T1, T2,..., and TN are all within a preset threshold range and send a determining result to the processing module; and

the processing module is configured to receive the determining result, and when the determining result is yes, update a current screen locking time value into the sum of the current screen locking time value and a preset time delay value.

The time value acquiring module of the device in the present embodiment is further configured to, when acquiring the time interval values between screen locking and unlocking for N times, acquire time interval values T21, T22,..., and T2N between the last time when a user operates initiatively and the current unlocking moment after each unlocking and before the next screen locking; and according to the time interval values T21, T22,..., and T2N, acquire a first time delay value according to a first preset rule; wherein the preset delay value includes the first time delay value.

In other embodiments of the disclosure, the time value acquiring module is further configured to, after acquiring the time interval values T1, T2,..., and TN between screen locking and unlocking for consecutive N times, acquire according to the time interval values T1, T2,..., and TN a second time delay value according to a second preset rule; the preset time delay value may further include the second time delay value.

In other embodiments of the disclosure, the time value acquiring module is further configured to, when acquiring the time interval values of N times between screen locking and unlocking, acquire time values T31, T32,..., T3N consumed by each unlocking; according to the time values T31, T32,..., T3N, acquire a third time delay value according to a third preset rule; wherein the preset time delay value includes the third time delay value.

Referring to Fig. 4, the device in the present embodiment further may include a monitoring module. Updating the current screen locking time value into the current screen locking time value plus the preset time delay value by the processing module may specifically include updating a current default screen locking time value into the sum of a current default screen locking time value and the preset time delay value. The monitoring module is configured to determine whether the user locks the screen initiatively after the last unlocking or if the user has not operated within a preset operation time threshold; if yes, notify the processing module to recover a screen locking time value into the default screen locking time value.

Referring to Fig. 5, the device in the present embodiment may further include an associating module; the processing module is further configured to store the updated screen locking time value; the associating module is configured to, after the processing module updates the current screen locking time value into the current screen locking time value plus the preset time delay value, record a current usage scenario, associate the current usage scenario with the updated screen locking time value. During a subsequent usage process, once it is detected that the user enters the usage scenario over again, the processing module may be notified directly to update the current screen locking time value into the updated screen locking time value to save resources and improve the satisfaction in user experience.

To better understand the disclosure, the disclosure will be further described below in combination with a specific usage scenario. In addition, a preset time delay value in the example includes the first time delay value, the second time delay value, the third time delay value and the fourth time delay value above, and the fourth time delay value is set as 2 seconds. The specific usage scenario is as follows:

provided that a current usage scenario of a user is reading a novel, and the user finishes reading one page of the novel in about 30 seconds normally and a screen locking time value of an automatic screen locking function set by a terminal currently is 20 seconds (i.e. T=20 seconds); ideally, if the terminal does not lock the screen automatically, the user will turn a page initiatively about 30 seconds later; however, if there is automatic screen locking, the user will need to unlock the screen after reading for 20 seconds, i.e. unlocking needs to be performed every 20 seconds; an unlocking operation of the user is generally very fast, and it is assumed that the maximum value is 0.5 second, that is a maximum time value consumed by each unlocking is 0.5 second, i.e. MAX[T31, T32, ..., T3N]=0.5; after unlocking, it will further take approximately 10 seconds for the user to finish reading; subsequently, the user will turn the page initiatively; before turning the page, the user may also have some other operations, thus the maximum time interval from each finishing moment of unlocking to the moment of last initiative operation of the user before the next screen locking is selected as 10 seconds in the disclosure, i.e. MAX [T21, T22, ..., T2N]= 10 seconds;

(1) if the user performs unlocking immediately after locking the screen, the time interval between each screen locking and unlocking may be ignored, i.e. MAX[T1, T2, ..., TN]=0 second; at the moment, the updated screen locking time value T' is:

$$T'=T+MAX\ [T1,\ T2,\ \ldots,\ TN]+MAX[T31,\ T32,\ \ldots,\ T3N]+MAX[T21,\ T22,\ \ldots,\ T2N]+the$$

fourth time delay value=20+0+0.5+10+2=32.5 seconds;

(2) if the user performs unlocking approximately 4 seconds after locking the screen, i.e. the maximum time interval value between each screen locking and unlocking is 4 seconds, i.e. MAX[T1, T2, ......, TN]=4 seconds, then it can be calculated that a new screen locking time value T' is:

$$T'=T+MAX[T1,\ T2,\ \ldots,\ TN]+MAX[T31,\ T32,\ \ldots,\ T3N]+MAX[T21,\quad T22,\ \ldots,\quad T2N]+the$$

fourth time delay value=20+4+0.5+10+2=36.5 seconds.

Therefore, no matter whether the user performs unlocking immediately or several seconds after locking the screen, page turning performed by the user after reading one page of the novel will not be interfered by screen locking after a user usage rule is learned through the screen locking time adjusting method provided by the disclosure to automatically adjust the screen locking time of the terminal. In addition, after updating the screen locking time value, the updated screen locking time value may be further associated with the usage scenario (e.g. novel reading). When the usage environment of reading a novel is used again, the updated screen locking time value may be invoked directly, and it is unnecessary to repeat the above adjusting process, which can further improve the satisfaction in user experience.
The above contents are further detailed descriptions of the disclosure with reference to the embodiments, and the embodiments of the disclosure cannot be thought to be limited to these descriptions. For those of ordinary skill in the field to which the disclosure belongs, some simple deduction or replacement can further be made under the premise of not departing from the conception of the disclosure, and should all be regarded as falling within the protection scope of the disclosure.

**Claims**

1.  A method for adjusting screen locking time, comprises:

    acquiring time interval values T1, T2,..., and TN between screen locking and screen unlocking for consecutive N times, wherein an N value is a preset value;
    determining whether the time interval values T1, T2,..., and TN are all within a preset threshold range; and
    when it is determined that the time interval values T1, T2,..., and TN are all within the preset threshold range, updating a current screen locking time value into a sum of the current screen locking time value and a preset time delay value;
    **characterized in that**,
    after updating the current screen locking time value into the sum of the current screen locking time value and the preset time delay value,

    storing an updated screen locking time value, and recording steps of a current usage scenario;
    associating the current usage scenario with the updated screen locking time value; and
    when it is detected that a terminal enters the current usage scenario, updating the current screen locking time value into the updated screen locking time value directly.

2.  The method for adjusting screen locking time according to claim 1, further comprising:

    Acquiring, after each unlocking and before next screen locking, time interval values T21, T22,..., and T2N between last time when a user operates initiatively and a current unlocking moment; and
    according to the time interval values T21, T22,..., and T2N, acquiring a first time delay value according to a first preset rule, wherein the preset delay value comprises the first time delay value.

3.  The method for adjusting screen locking time according to claim 2, further comprising: after acquiring the time interval values T1, T2,..., and TN between screen locking and screen unlocking for consecutive N times, according to the time interval values T1, T2,..., and TN, acquiring a second time delay value according to a second preset rule, wherein the preset time delay value comprises the second time delay value.

4. The method for adjusting screen locking time according to claim 2, further comprises:

acquiring time values T31, T32,..., T3N consumed by each unlocking; and
according to the time values T31, T32,..., T3N, acquiring a third time delay value according to a third preset rule, wherein the preset time delay value comprises the third time delay value.

5. The method for adjusting screen locking time according to any one of claims 1 to 4, wherein the preset time delay value comprises a fourth time delay value, and the fourth time delay value is a preset time delay compensation value.

6. The method for adjusting screen locking time according to any one of claims 1 to 4, wherein updating the current screen locking time value into the sum of the current screen locking time value and the preset time delay value comprises:

updating a current default screen locking time value into a sum of a current default screen locking time value and the preset time delay value.

7. The method for adjusting screen locking time according to claim 6, further comprising: after updating the current default screen locking time value into the sum of the current default screen locking time value and the preset time delay value,
determining whether a user performs screen locking initiatively after last unlocking or if the user has not operated within a preset operation time threshold; and
if the screen locking is performed initiatively or the user has not operated within the preset operation time threshold, recovering a screen locking time value into the default screen locking time value.

8. A device for adjusting screen locking time, comprising a time value acquiring module, a determining module and a processing module, wherein
the time value acquiring module is configured to acquire time interval values T1, T2,..., and TN between screen locking and screen unlocking for consecutive N times, and send the time interval values T1, T2,..., and TN to the determining module, wherein the N value is a preset value;
the determining module is configured to determine whether the time interval values T1, T2,..., and TN are all within a preset threshold range and send a determining result to the processing module;
the processing module is configured to receive the determining result, and when the determining result indicates that the time interval values T1, T2,..., and TN are all within the preset threshold range, update a current screen locking time value into a sum of the current screen locking time value and a preset time delay value;
**characterized in that**,
the device further comprises an associating module;

the processing module is further configured to store an updated screen locking time value;
the associating module is configured to record steps of a current usage scenario, associate the current usage scenario with the updated screen locking time value; and

when it is detected that a terminal enters the current usage scenario, notify the processing module to update the current screen locking time value into the updated screen locking time value directly.

9. The device for adjusting screen locking time according to claim 8, wherein the time value acquiring module is further configured to acquire, after each unlocking and before next screen locking, time interval values T21, T22,..., and T2N between last time when a user operates initiatively and a current unlocking moment; and
according to the time interval values T21, T22,..., and T2N, acquire a first time delay value according to a first preset rule, wherein the preset delay value comprises the first time delay value.

10. The device for adjusting screen locking time according to claim 9, wherein the time value acquiring module is further configured to, after acquiring the time interval values T1, T2,..., and TN between screen locking and screen unlocking for consecutive N times, acquire a second time delay value according to a second preset rule according to the time interval values T1, T2,..., and TN, wherein the preset time delay value comprises the second time delay value.

11. The device for adjusting screen locking time according to claim 9, wherein the time value acquiring module is further configured to acquire time values T31, T32,..., T3N consumed by each unlocking; and according to the time values T31, T32,..., T3N, acquire a third time delay value according to a third preset rule, wherein the preset time delay value comprises the third time delay value.

12. The device for adjusting screen locking time according to any one of claims 8 to 11, further comprising a monitoring module;
the processing module is configured to update a current default screen locking time value into a sum of a current default screen locking time value and the preset time delay value;
the monitoring module is configured to determine whether a user performs screen locking initiatively after last unlocking or if the user has not operated within a preset operation time threshold; and
if the screen locking is performed initiatively or the user has not operated within the preset operation time threshold, notify the processing module to recover a screen locking time value into the default screen locking time value.

13. An electronic terminal, comprising a display screen and further comprising the device for adjusting screen locking time according to any one of claims 8 to 12, wherein the device for adjusting screen locking time is connected with the display screen and configured to adjust screen locking time of the electronic terminal.

**Patentansprüche**

1. Verfahren zur Einstellung einer Bildschirmsperrzeit, umfassend:

   Erwerben von Zeitintervallwerten T1, T2, ..., und TN zwischen Bildschirmsperrung und Bildschirmentsperrung für aufeinander folgende N Male, wobei ein N-Wert ein voreingestellter Wert ist;
   Bestimmen, ob die Zeitintervallwerte T1, T2 und TN alle innerhalb eines voreingestellten Schwellenbereichs liegen; und
   wenn bestimmt wird, dass die Zeitintervallwerte T1, T2, ..., und TN alle innerhalb eines voreingestellten Schwellenbereichs liegen, Aktualisieren eines laufenden Bildschirmsperrzeitwerts zu einer Summe des laufenden Bildschirmsperrzeitwerts und einen voreingestellten Zeitverzögerungswert;

   **gekennzeichnet durch**,

   nach dem Aktualisieren des laufenden Bildschirmsperrzeitwerts zu einer Summe des laufenden Bildschirmsperrzeitwerts und des voreingestellten Zeitverzögerungswerts
   Speichern eines aktualisierten Bildschirmsperrzeitwerts und Aufzeichnung von Schritten eines laufenden Verwendungsszenarios;
   Assoziieren des laufenden Verwendungsszenarios mit dem aktualisierten Bildschirmsperrzeitwert; und
   wenn nachgewiesen wird, dass ein Endgerät in das laufende Verwendungsszenario eintritt, direktes Aktualisieren des laufenden Bildschirmsperrzeitwerts zum aktualisierten Bildschirmsperrzeitwert.

2. Verfahren zur Einstellung der Bildschirmsperrzeit nach Anspruch 1, weiter umfassend:

   Erwerben, nach jeder Entsperrung und vor der nächsten Bildschirmsperre, von Zeitintervallwerten T21, T22, ..., und T2N zwischen dem letzten Mal, bei dem ein Benutzer anfänglich arbeitet, und einem aktuellen Entsperrungszeitpunkt; und
   gemäß den Zeitintervallwerten T21, T22 und T2N, Erwerben eines ersten Zeitverzögerungswerts gemäß einer ersten voreingestellten Regel, wobei der voreingestellte Verzögerungswert den ersten Zeitverzögerungswert umfasst.

3. Verfahren zur Einstellung der Bildschirmsperrzeit nach Anspruch 2, weiter umfassend: nach dem Erwerben der Zeitintervallwerte T1, T2, ..., und TN zwischen Bildschirmsperrung und Bildschirmentsperrung für aufeinander folgende N Male,
   gemäß den Zeitintervallwerten T1, T2,..., und TN Erwerben eines zweiten Zeitverzögerungswerts gemäß einer zweiten voreingestellten Regel, wobei der voreingestellte Zeitverzögerungswert den zweiten Zeitverzögerungswert umfasst.

4. Verfahren zur Einstellung der Bildschirmsperrzeit nach Anspruch 2, weiter umfassend:

Erwerb von Zeitwerten T31, T32, ..., T3N, die von jeder Entsperrung verbraucht werden; und

gemäß den Zeitwerten T31, T32, ..., T3N, Erwerben eines dritten Zeitverzögerungswerts

gemäß einer dritten voreingestellten Regel, wobei der voreingestellte Zeitverzögerungswert den dritten Zeitverzögerungswert umfasst.

5. Verfahren zur Einstellung der Bildschirmsperrzeit nach einem der Ansprüche 1 bis 4, wobei der voreingestellte Zeitverzögerungswert einen vierten Zeitverzögerungswert umfasst und der vierte Zeitverzögerungswert ein voreingestellter Zeitverzögerungs-Kompensationswert ist.

6. Verfahren zur Einstellung der Bildschirmsperrzeit nach einem der Ansprüche 1 bis 4, wobei das Aktualisieren des laufenden Bildschirmsperrzeitwerts zu einer Summe des laufenden Bildschirmsperrzeitwerts und des voreingestellten Zeitverzögerungswerts Folgendes umfasst:

Aktualisieren eines laufenden standardmäßigen Bildschirmsperrzeitwerts zu einer Summe eines laufenden standardmäßigen Bildschirmsperrzeitwerts und des voreingestellten Zeitverzögerungswerts.

7. Verfahren zur Einstellung der Bildschirmsperrzeit nach Anspruch 6, weiter umfassend: nach dem Aktualisieren des laufenden standardmäßigen Bildschirmsperrzeitwerts zur Summe des laufenden standardmäßigen Bildschirmsperrzeitwerts und des voreingestellten Zeitverzögerungswerts,

Bestimmen, ob ein Benutzer eine Bildschirmsperre anfänglich nach dem letzten Entsperren durchführt, oder ob der Benutzer nicht innerhalb einer voreingestellten Betriebszeit-Schwelle gearbeitet hat; und

wenn die Bildschirmsperre anfänglich durchgeführt wird oder der Benutzer nicht innerhalb der voreingestellten Betriebszeitschwelle gearbeitet hat, Wiedergewinnen eines Bildschirmsperrzeitwerts im standardmäßigen Bildschirmsperrzeitwert.

8. Verfahren zur Einstellung einer Bildschirmsperrzeit, umfassend: ein Zeitwert-Erwerbsmodul, ein Bestimmungsmodul und ein Verarbeitungsmodul, wobei

das Zeitwert-Erwerbsmodul konfiguriert ist, um Zeitintervallwerte T1, T2, ..., und TN zwischen Bildschirmsperrung und Bildschirmentsperrung für aufeinander folgende N Male zu erwerben und die Zeitintervallwerte T1, T2, ..., und TN an das Bestimmungsmodul zu senden, wobei der N Wert ein voreingetellter Wert ist;

das Bestimmungsmodul konfiguriert ist, um zu bestimmen, ob die Zeitintervallwerte T1, T2 und TN alle innerhalb eines voreingestellten Schwellenbereichs liegen; und ein Bestimmungsergebnis an die Verarbeitungseinheit zu schicken;

das Verarbeitungsmodul konfiguriert ist, um das Bestimmungsergebnis zu erhalten, und, wenn das Bestimmungsergebnis anzeigt, dass die Zeitintervallwerte T1, T2, ..., und TN alle innerhalb des voreingestellten Schwellenbereichs liegen, Aktualisieren eines laufenden Bildschirmsperrzeitwerts zu einer Summe des laufenden Bildschirmsperrzeitwerts und eines voreingestellten Zeitverzögerungswerts;

**dadurch gekennzeichnet, dass**

die Vorrichtung weiter ein Assoziierungsmodul umfasst;

das Verarbeitungsmodul weiter konfiguriert ist, um einen aktualisierten Bildschirmsperrzeitwert zu speichern;

das Assoziierungsmodul konfiguriert ist, um Schritte eines laufenden Verwendungsszenarios aufzuzeichnen, das laufende Verwendungsszenario mit dem aktualisierten Bildschirmsperrzeitwert zu assoziieren; und

wenn nachgewiesen wird, dass ein Endgerät in das laufende Verwendungsszenario eintritt, Anweisen des Verarbeitungsmoduls, den laufenden Bildschirmsperrzeitwert direkt zum aktualisierten Bildschirmsperrzeitwert zu aktualisieren.

9. Verfahren zur Einstellung der Bildschirmsperrzeit nach Anspruch 8, wobei das Zeitwert-Erwerbsmodul weiter konfiguriert ist, um, nach jeder Entsperrung und vor der nächsten Bildschirmsperre, Zeitintervallwerte T21, T22, ..., und T2N zwischen dem letzten Mal, bei dem ein Benutzer anfänglich arbeitet, und einem aktuellen Entsperrungszeitpunkt zu erwerben; und

gemäß den Zeitintervallwerten T1, T2,..., und TN einen ersten Zeitverzögerungswert gemäß einer ersten voreingestellten Regel zu erwerben, wobei der vorgegebene Verzögerungswert der ersten Zeitverzögerungswert umfasst.

10. Verfahren zur Einstellung der Bildschirmsperrzeit nach Anspruch 9, wobei das Zeitwert-Erwerbsmodul weiter konfiguriert ist, um, nach dem Erwerben der Zeitintervallwerte T1, T2, ..., und TN zwischen Bildschirmsperrung und Bildschirmentsperrung für aufeinander folgende N Male, einen zweiten Zeitverzögerungswert gemäß einer zweiten voreingestellten Regel gemäß den Zeitintervallwerten T1, T2,..., und TN zu erwerben, wobei der voreingestellte Zeitverzögerungswert den zweiten Zeitverzögerungswert umfasst.

**11.** Verfahren zur Einstellung der Bildschirmsperrzeit nach Anspruch 9, wobei das Zeitwert-Erwerbsmodul weiter konfiguriert ist, um Zeitwerte T31, T32, ..., T3N zu erwerben, die von jeder Entsperrung verbraucht werden; und gemäß den Zeitwerten T31, T32, ..., T3N einen dritten Zeitverzögerungswert gemäß einer dritten voreingestellten Regel zu erwerben, wobei der voreingestellte Zeitverzögerungswert den dritten Zeitverzögerungswert umfasst.

**12.** Verfahren zur Einstellung der Bildschirmsperrzeit nach einem der Ansprüche 8 bis 11, weiter umfassend ein Überwachungsmodul;

das Verarbeitungsmodul ist konfiguriert, um einen laufenden standardmäßigen Bildschirmsperrzeitwert zu einer Summe eines laufenden standardmäßigen Bildschirmsperrzeitwerts und des voreingestellten Zeitverzögerungswerts zu aktualisieren;

das Überwachungsmodul ist konfiguriert, um zu bestimmen, ob ein Benutzer eine Bildschirmsperre anfänglich nach dem letzten Entsperren durchführt, oder ob der Benutzer nicht innerhalb einer voreingestellten Betriebszeit-Schwelle gearbeitet hat; und

wenn die Bildschirmsperre ursprünglich durchgeführt wird oder der Benutzer nicht innerhalb der voreingestellten Betriebszeitschwelle gearbeitet hat, Anweisen des Verarbeitungsmoduls, einen Bildschirmsperrzeitwert im standardmäßigen Bildschirmsperrzeitwert wiederzugewinnen.

**13.** Elektronisches Endgerät, umfassend einen Anzeigebildschirm und weiter umfassend die Vorrichtung, um die Bildschirmsperrzeit nach einem der Ansprüche 8 bis 12, einzustellen, wobei die Vorrichtung zur Einstellung der Bildschirmsperrzeit mit dem Anzeigebildschirm verbunden und konfiguriert ist, um die Bildschirmsperrzeit des elektronischen Endgeräts einzustellen.

## Revendications

**1.** Procédé d'ajustement de temps de verrouillage d'écran, comprenant les étapes ci-dessous consistant à :

acquérir des valeurs d'intervalle de temps T1, T2, ..., et TN entre un verrouillage d'écran et un déverrouillage d'écran pour N instants consécutifs, dans lequel une valeur N correspond à une valeur prédéfinie ;

déterminer si les valeurs d'intervalle de temps T1, T2, ..., et TN sont toutes dans une plage de seuil prédéfinie ; et

lorsqu'il est déterminé que les valeurs d'intervalle de temps T1, T2, ..., et TN sont toutes dans la plage de seuil prédéfinie, mettre à jour une valeur de temps de verrouillage d'écran en cours en une somme de la valeur de temps de verrouillage d'écran en cours et d'une valeur de retard de temps prédéfinie ;

**caractérisé par** les étapes consistant à,

suite à la mise à jour de la valeur de temps de verrouillage d'écran en cours en la somme de la valeur de temps de verrouillage d'écran en cours et de la valeur de retard de temps prédéfinie,

stocker une valeur de temps de verrouillage d'écran mise à jour, et enregistrer les étapes d'un scénario d'utilisation en cours ;

associer le scénario d'utilisation en cours à la valeur de temps de verrouillage d'écran mise à jour ; et

lorsqu'il est détecté qu'un terminal entre dans le scénario d'utilisation en cours, mettre à jour la valeur de temps de verrouillage d'écran en cours en la valeur de temps de verrouillage d'écran mise à jour, directement.

**2.** Procédé d'ajustement de temps de verrouillage d'écran selon la revendication 1, comprenant en outre les étapes ci-dessous consistant à :

acquérir, suite à chaque déverrouillage et avant un verrouillage d'écran successif, des valeurs d'intervalle de temps T21, T22, ..., et T2N entre le dernier instant où un utilisateur opère de sa propre initiative et un moment de déverrouillage en cours ; et

selon les valeurs d'intervalle de temps T21, T22, ..., et T2N, acquérir une première valeur de retard de temps selon une première règle prédéfinie, dans lequel la valeur de retard prédéfinie comprend la première valeur de retard de temps.

**3.** Procédé d'ajustement de temps de verrouillage d'écran selon la revendication 2, comprenant en outre l'étape ci-dessous consistant à : suite à l'acquisition des valeurs d'intervalle de temps T1, T2, ..., et TN entre un verrouillage d'écran et un déverrouillage d'écran pour N instants consécutifs,

selon les valeurs d'intervalle de temps T1, T2, ..., et TN, acquérir une deuxième valeur de retard de temps selon une deuxième règle prédéfinie, dans lequel la valeur de retard de temps prédéfinie comprend la deuxième valeur de retard de temps.

4. Procédé d'ajustement de temps de verrouillage d'écran selon la revendication 2, comprenant en outre les étapes ci-dessous consistant à :

acquérir des valeurs de temps T31, T32, ..., et T3N consommées par chaque déverrouillage ; et
selon les valeurs de temps T31, T32, ..., et T3N, acquérir une troisième valeur de retard de temps selon une troisième règle prédéfinie, dans lequel la valeur de retard de temps prédéfinie comprend la troisième valeur de retard de temps.

5. Procédé d'ajustement de temps de verrouillage d'écran selon l'une quelconque des revendications 1 à 4, dans lequel la valeur de retard de temps prédéfinie comprend une quatrième valeur de retard de temps et la quatrième valeur de retard de temps correspond à une valeur de compensation de retard de temps prédéfinie.

6. Procédé d'ajustement de temps de verrouillage d'écran selon l'une quelconque des revendications 1 à 4, dans lequel l'étape de mise à jour de la valeur de temps de verrouillage d'écran en cours en la somme de la valeur de temps de verrouillage d'écran en cours et de la valeur de retard de temps prédéfinie consiste à :

mettre à jour une valeur de temps de verrouillage d'écran par défaut en cours en une somme d'une valeur de temps de verrouillage d'écran par défaut en cours et de la valeur de retard de temps prédéfinie.

7. Procédé d'ajustement de temps de verrouillage d'écran selon la revendication 6, comprenant en outre les étapes ci-dessous consistant à : suite à la mise à jour de la valeur de temps de verrouillage d'écran par défaut en cours en la somme de la valeur de temps de verrouillage d'écran par défaut en cours et de la valeur de retard de temps prédéfinie,
déterminer si un utilisateur met en oeuvre un verrouillage d'écran de sa propre initiative suite à un dernier verrouillage, ou si l'utilisateur n'a pas opéré au cours d'un seuil de temps d'opération prédéfini ; et
si le verrouillage d'écran est mis en oeuvre de sa propre initiative ou si l'utilisateur n'a pas opéré au cours du seuil de temps d'opération prédéfini, restaurer une valeur de temps de verrouillage d'écran en la valeur de temps de verrouillage d'écran par défaut.

8. Dispositif destiné à ajuster un temps de verrouillage d'écran, comprenant un module d'acquisition de valeur de temps, un module de détermination et un module de traitement, dans lequel
le module d'acquisition de valeur de temps est configuré de manière à acquérir des valeurs d'intervalle de temps T1, T2, ..., et TN entre un verrouillage d'écran et un déverrouillage d'écran pour N instants consécutifs, et à envoyer les valeurs d'intervalle de temps T1, T2, ..., et TN au module de détermination, dans lequel la valeur N correspond à une valeur prédéfinie ;
le module de détermination est configuré de manière à déterminer si les valeurs d'intervalle de temps T1, T2, ..., et TN sont toutes dans une plage de seuil prédéfinie, et à envoyer un résultat de détermination au module de traitement ; et
le module de traitement est configuré de manière à recevoir le résultat de détermination, et, lorsque le résultat de détermination indique que les valeurs d'intervalle de temps T1, T2, ..., et TN sont toutes dans la plage de seuil prédéfinie, à mettre à jour une valeur de temps de verrouillage d'écran en cours en une somme de la valeur de temps de verrouillage d'écran en cours et d'une valeur de retard de temps prédéfinie ;
**caractérisé en ce que**,
le dispositif comprend en outre un module d'association ;

le module de traitement est en outre configuré de manière à stocker une valeur de temps de verrouillage d'écran mise à jour ;
le module d'association est configuré de manière à enregistrer les étapes d'un scénario d'utilisation en cours, à associer le scénario d'utilisation en cours à la valeur de temps de verrouillage d'écran mise à jour ; et

lorsqu'il est détecté qu'un terminal entre dans le scénario d'utilisation en cours, à signaler au module de traitement de mettre à jour la valeur de temps de verrouillage d'écran en cours en la valeur de temps de verrouillage d'écran mise à jour, directement.

9. Dispositif destiné à ajuster un temps de verrouillage d'écran selon la revendication 8, dans lequel le module d'acquisition de valeur de temps est configuré en outre de manière à acquérir, suite à chaque déverrouillage et avant un verrouillage d'écran successif, des valeurs d'intervalle de temps T21, T22, ..., et T2N entre un dernier instant où un utilisateur opère de sa propre initiative et un moment de déverrouillage en cours ; et

selon les valeurs d'intervalle de temps T21, T22, ..., et T2N, à acquérir une première valeur de retard de temps selon une première règle prédéfinie, dans lequel la valeur de retard prédéfinie comprend la première valeur de retard de temps.

10. Dispositif destiné à ajuster un temps de verrouillage d'écran selon la revendication 9, dans lequel le module d'acquisition de valeur de temps est configuré en outre de manière à, suite à l'acquisition des valeurs d'intervalle de temps T1, T2, ..., et TN entre un verrouillage d'écran et un déverrouillage d'écran pour N instants consécutifs, acquérir une deuxième valeur de retard de temps selon une deuxième règle prédéfinie conformément aux valeurs d'intervalle de temps T1, T2, ..., et TN, dans lequel la valeur de retard de temps prédéfinie comprend la deuxième valeur de retard de temps.

11. Dispositif destiné à ajuster un temps de verrouillage d'écran selon la revendication 9, dans lequel le module d'acquisition de valeur de temps est en outre configuré de manière à acquérir des valeurs de temps T31, T32, ..., et T3N consommées par chaque déverrouillage ; et selon les valeurs de temps T31, T32, ..., et T3N, à acquérir une troisième valeur de retard de temps selon une troisième règle prédéfinie, dans lequel la valeur de retard de temps prédéfinie comprend la troisième valeur de retard de temps.

12. Dispositif destiné à ajuster un temps de verrouillage d'écran selon l'une quelconque des revendications 8 à 11, comprenant en outre un module de surveillance ;

dans lequel le module de traitement est configuré de manière à mettre à jour une valeur de temps de verrouillage d'écran par défaut en cours en une somme d'une valeur de temps de verrouillage d'écran par défaut en cours et de la valeur de retard de temps prédéfinie ;

le module de surveillance est configuré de manière à déterminer si un utilisateur met en oeuvre un verrouillage d'écran de sa propre initiative suite à un dernier verrouillage ou si l'utilisateur n'a pas opéré au cours d'un seuil de temps d'opération prédéfini ; et

si le verrouillage d'écran est mis en oeuvre de sa propre initiative ou si l'utilisateur n'a pas opéré au cours du seuil de temps d'opération prédéfini, à signaler au module de traitement de restaurer une valeur de temps de verrouillage d'écran sur la valeur de temps de verrouillage d'écran par défaut.

13. Terminal électronique, comprenant un écran d'affichage et comprenant en outre le dispositif destiné à ajuster un temps de verrouillage d'écran selon l'une quelconque des revendications 8 à 12, dans lequel le dispositif destiné à ajuster un temps de verrouillage d'écran est connecté à l'écran d'affichage et est configuré de manière à ajuster un temps de verrouillage d'écran du terminal électronique.

Fig. 1

101

acquiring time interval values T1, T2,..., and TN between screen locking and screen unlocking for consecutive N times

102

Determining whether the acquired time interval values T1, T2,..., and TN are all within a preset threshold range

No

Yes                103

updating a current screen locking time value into the sum of the current screen locking time value and a preset time delay value

Fig. 2

101

acquiring time interval values T1, T2,..., and TN between screen locking and screen unlocking for consecutive N times

102

Determining whether the acquired time interval values T1, T2,..., and TN are all within a preset threshold range

No

Yes                103

updating a current screen locking time value into the sum of the current screen locking time value and a preset time delay value

104

Determining whether the user locks the screen initiatively after the last unlocking or if the user has not operated within a preset operation time threshold

No

Yes                105

recovering a screen locking time value into the default screen locking time value

Fig. 3

```
┌─────────────┐      ┌─────────────┐      ┌─────────────┐
│ Time value  │      │ Determining │      │ Processing  │
│ acquiring   ├──────┤   module    ├──────┤   module    │
│ module      │      │             │      │             │
└─────────────┘      └─────────────┘      └─────────────┘
```

Fig. 4

```
┌─────────────┐      ┌─────────────┐      ┌─────────────┐
│ Time value  │      │ Determining │      │ Processing  │
│ acquiring   ├──────┤   module    ├──────┤   module    │
│ module      │      │             │      │             │
└─────────────┘      └─────────────┘      └──────┬──────┘
                                                 │
                                          ┌──────┴──────┐
                                          │ Monitoring  │
                                          │   module    │
                                          └─────────────┘
```

Fig. 5

```
                                          ┌─────────────┐
                                          │ Associating │
                                          │   module    │
                                          └──────┬──────┘
                                                 │
┌─────────────┐      ┌─────────────┐      ┌──────┴──────┐
│ Time value  │      │ Determining │      │ Processing  │
│ acquiring   ├──────┤   module    ├──────┤   module    │
│ module      │      │             │      │             │
└─────────────┘      └─────────────┘      └──────┬──────┘
                                                 │
                                          ┌──────┴──────┐
                                          │ Monitoring  │
                                          │   module    │
                                          └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6516421 B1